# EUROPEAN PATENT APPLICATION

(11) **EP 4 641 262 A1**
(43) Date of publication of application: **29.10.2025**
(21) Application number: 25169745.4
(22) Date of filing: 10.04.2025
(51) Int. Cl.: G01W 1/10, G01W 1/14, G06N 3/0464, G06N 3/09, G06N 3/096, G06V 10/82, G06V 20/70

(54) **DEEP LEARNING MODEL FOR DETECTING AND CLASSIFYING WEATHER CONDITIONS**

(30) Priority: 22.04.2024 FI 20245514
(71) Applicant: Nokia Solutions and Networks Oy, 02610 Espoo (FI)
(72) Inventor: MEJIA LOPEZ, Carolina, Espoo (FI); HEIDARI, Taha, Espoo (FI)
(74) Representative: Nokia EPO representatives

(57) **Abstract**

Disclosed is a method comprising receiving a telecommunication signal (211) that is attenuated in multiple different weather conditions; labeling the telecommunication signal (211) with the multiple different weather conditions; generating a set of spectrogram images (221-229) based on the telecommunication signal labeled with the multiple different weather conditions; and training a deep learning model (240) for detecting and classifying the multiple different weather conditions based on the set of spectrogram images (221-229).

## Description

### FIELD

The following example embodiments relate to weather sensing and to machine learning.

### BACKGROUND

Weather sensing may involve using environmental monitoring devices, known as weather station sensors, to measure and quantify various weather data. These weather sensors help inform decision-making by providing information on factors such as temperature, wind speed, precipitation, air pressure, etc. However, weather stations are located far apart, and weather sensors may be costly and/or complex to implement. Therefore, more sustainable techniques for weather sensing are needed.

### SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided an apparatus comprising: means for receiving a telecommunication signal that is attenuated in multiple different weather conditions; means for labeling the telecommunication signal with the multiple different weather conditions; means for generating a set of spectrogram images based on the telecommunication signal labeled with the multiple different weather conditions; and means for training a deep learning model for detecting and classifying the multiple different weather conditions based on the set of spectrogram images.

According to a second aspect, there is provided the apparatus of the first aspect, further comprising: means for detecting and classifying one or more weather conditions with the trained deep learning model by inputting one or more spectrogram images of an unlabeled telecommunication signal to the trained deep learning model.

According to a third aspect, there is provided the apparatus of the first or second aspect, further comprising: means for collecting, from one or more weather sensors, weather information indicating the multiple different weather conditions in an area where the telecommunication signal is received; and means for mapping each weather condition of the multiple different weather conditions to a related signal attenuation of the telecommunication signal, wherein the labeling is based on the mapping.

According to a fourth aspect, there is provided the apparatus of any of the first to third aspects, wherein the multiple different weather conditions comprise at least: rain, snow, and no precipitation.

According to a fifth aspect, there is provided the apparatus of any of the first to fourth aspects, wherein the telecommunication signal comprises a millimeter-wave signal.

According to a sixth aspect, there is provided the apparatus of any of the first to fifth aspects, wherein the means for generating the set of spectrogram images are configured to generate the set of spectrogram images based on a received signal level or a received signal strength indicator of the telecommunication signal.

According to a seventh aspect, there is provided the apparatus of any of the first to sixth aspects, further comprising: means for scaling a sampling frequency of the telecommunication signal to be compatible with one or more signal processing libraries used for generating the set of spectrogram images; and means for obtaining a set of window-frame samples of the labeled telecommunication signal according to the scaled sampling frequency, wherein the set of spectrogram images correspond to the set of window-frame samples.

According to an eighth aspect, there is provided the apparatus of any of the first to seventh aspects, wherein the generation of the set of spectrogram images comprises converting each window-frame sample of the labeled telecommunication signal into a two-dimensional Mel spectrogram image.

According to a ninth aspect, there is provided the apparatus of any of the first to eighth aspects, wherein the training of the deep learning model comprises mapping a label of each window-frame sample of the labeled telecommunication signal to a corresponding spectrogram image of the set of spectrogram images.

According to a tenth aspect, there is provided the apparatus of any of the first to ninth aspects, wherein the deep learning model comprises a convolutional neural network pre-trained for image classification, wherein the training of the deep learning model comprises fine-tuning the convolutional neural network based on the set of spectrogram images for detecting and classifying the multiple different weather conditions.

According to an eleventh aspect, there is provided an apparatus comprising: means for receiving a deep learning model trained for detecting and classifying multiple different weather conditions based on a set of spectrogram images; means for receiving a telecommunication signal that is attenuated in one or more weather conditions; means for generating one or more spectrogram images based on the telecommunication signal; and means for detecting and classifying the one or more weather conditions with the deep learning model by inputting the one or more spectrogram images to the deep learning model.

According to a twelfth aspect, there is provided the apparatus of the eleventh aspect, wherein the deep learning model was trained by the apparatus of any of the first to tenth aspects.

According to a thirteenth aspect, there is provided a method comprising: receiving a telecommunication signal that is attenuated in multiple different weather conditions; labeling the telecommunication signal with the multiple different weather conditions; generating a set of spectrogram images based on the telecommunication signal labeled with the multiple different weather conditions; and training a deep learning model for detecting and classifying the multiple different weather conditions based on the set of spectrogram images.

According to a fourteenth aspect, there is provided a method comprising: receiving a deep learning model trained for detecting and classifying multiple different weather conditions based on a set of spectrogram images; receiving a telecommunication signal that is attenuated in one or more weather conditions; generating one or more spectrogram images based on the telecommunication signal; and detecting and classifying the one or more weather conditions with the deep learning model by inputting the one or more spectrogram images to the deep learning model.

According to a fifteenth aspect, there is provided a computer program comprising instructions which, when executed by an apparatus, cause the apparatus to perform at least the following: receiving a telecommunication signal that is attenuated in multiple different weather conditions; labeling the telecommunication signal with the multiple different weather conditions; generating a set of spectrogram images based on the telecommunication signal labeled with the multiple different weather conditions; and training a deep learning model for detecting and classifying the multiple different weather conditions based on the set of spectrogram images.

According to a sixteenth aspect, there is provided a computer program comprising instructions which, when executed by an apparatus, cause the apparatus to perform at least the following: receiving a deep learning model trained for detecting and classifying multiple different weather conditions based on a set of spectrogram images; receiving a telecommunication signal that is attenuated in one or more weather conditions; generating one or more spectrogram images based on the telecommunication signal; and detecting and classifying the one or more weather conditions with the deep learning model by inputting the one or more spectrogram images to the deep learning model.

According to a seventeenth aspect, there is provided a non-transitory computer readable medium comprising program instructions which, when executed by an apparatus, cause the apparatus to perform at least the following: receiving a telecommunication signal that is attenuated in multiple different weather conditions; labeling the telecommunication signal with the multiple different weather conditions; generating a set of spectrogram images based on the telecommunication signal labeled with the multiple different weather conditions; and training a deep learning model for detecting and classifying the multiple different weather conditions based on the set of spectrogram images.

According to an eighteenth aspect, there is provided a non-transitory computer readable medium comprising program instructions which, when executed by an apparatus, cause the apparatus to perform at least the following: receiving a deep learning model trained for detecting and classifying multiple different weather conditions based on a set of spectrogram images; receiving a telecommunication signal that is attenuated in one or more weather conditions; generating one or more spectrogram images based on the telecommunication signal; and detecting and classifying the one or more weather conditions with the deep learning model by inputting the one or more spectrogram images to the deep learning model.

### BRIEF DESCRIPTION OF THE DRAWINGS

In the following, various example embodiments will be described in greater detail with reference to the accompanying drawings, in which
FIG. 1 illustrates an example of a wireless communication network;
FIG. 2 illustrates an example embodiment of a system;
FIG. 3 illustrates an example embodiment of a system;
FIG. 4 illustrates a flow chart;
FIG. 5 illustrates a flow chart;
FIG. 6 illustrates a flow chart;
FIG. 7 illustrates a flow chart;
FIG. 8 illustrates an example of an apparatus;
FIG. 9 illustrates an example of an artificial neural network; and
FIG. 10 illustrates an example of a computational node.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

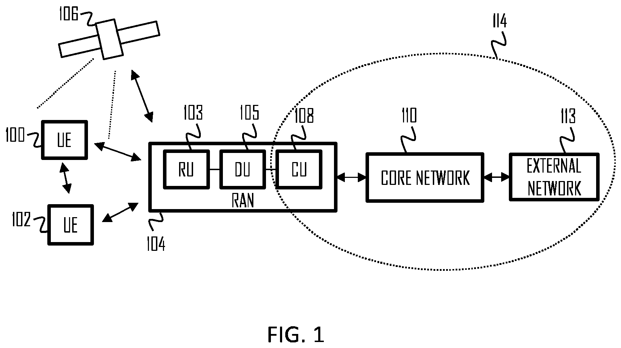

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, or a RAN node.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and receiving control plane signaling and also for routing data from one access node to another access node.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave). mmWaves refer to a specific part of the radio frequency spectrum between 24 gigahertz and 100 gigahertz.

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) 103 comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) 103 of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, but also low earth orbit (LEO) satellite systems, in particular mega-constellations (i.e., systems in which hundreds of (nano)satellites are deployed). A given satellite 106 in the mega-constellation may cover several satellite-enabled network entities that create on-ground cells. The on-ground cells may be created through an on-ground relay access node or by an access node located on-ground or in a satellite.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

The relevance of weather forecasting and nowcasting has been increasing in the past decades due to climate change. Weather sensing may involve using environmental monitoring devices, known as weather station sensors, to measure and quantify various weather data. These weather sensors help inform decision-making by providing information on factors such as temperature, wind speed, precipitation, air pressure, etc. However, weather stations are located far apart, and weather sensors may be costly and/or complex to implement. Therefore, more sustainable techniques for weather sensing are needed.

Electromagnetic waves, such as mmWaves, can be used for weather sensing, since they attenuate from weather conditions such as changes in humidity, precipitation, and fog. Real-time weather detection can also improve safety conditions for reporting slippery roads due to snow or rain, for example. Fixed radio links can provide useful information for weather sensing from their recorded received signal power. Therefore, signal attenuation may be used with machine learning to determine the presence of rain or snow in a bidirectional mmWave backhaul link, for example.

Convolutional neural networks (CNNs) are deep learning models that perform well in classifying images. With transfer learning, pre-trained CNN models may be fine-tuned to a different task. This technique is more time-efficient and accurate than designing and training a CNN model from scratch. Therefore, it is possible to obtain spectrograms from the received signal level (RSL) of wireless telecommunication signals and use transfer learning to fine-tune a pre-trained CNN model as a precipitation classifier. A spectrogram is a visual representation of the spectrum of frequencies of a signal as it varies with time.

However, currently, there seem to be no techniques available for generating spectrograms from the received signal level or received signal strength indicator (RSSI) of a wireless telecommunication signal, let alone using such spectrograms for weather sensing and precipitation classification. Using a spectrogram from the RSL or RSSI generates a three-dimensional input for a CNN, therefore comprising more information about the signal and giving the CNN a better input for classification.

The sampling frequency (sampling rate) of a signal represents the number of data samples acquired per time unit. The sampling frequency of the signal may be, for example, 30 samples per minute (0,5 hertz). However, such a sampling frequency may not be suitable for the generation of spectrograms. The normal sampling frequency for generating spectrograms may be, for example, in the order of a kilohertz or more. Therefore, imputing such a small sampling frequency (e.g., 0,5 hertz) as a parameter to a signal processing library may not generate the expected spectrograms. The currently available algorithms are not designed to work with sampling frequencies of less than or equal to 1 hertz.

Some example embodiments provide a method for utilizing a telecommunication signal for weather sensing (without needing actual weather sensors) by using a combination of labeling, feature extraction and deep learning techniques. Telecommunication signals, such as mmWave signals, are already being sent back-and-forth between different radio links, and these signals get attenuated in different weather conditions. Therefore, telecommunication signals may be used to provide alternative and complementary measurements to dedicated weather-sensing sensors and devices. Some example embodiments may enable hyperlocal weather sensing, which refers to the precise monitoring of weather conditions at a very localized scale, for example within a few meters, providing accurate data for specific areas or micro environments.

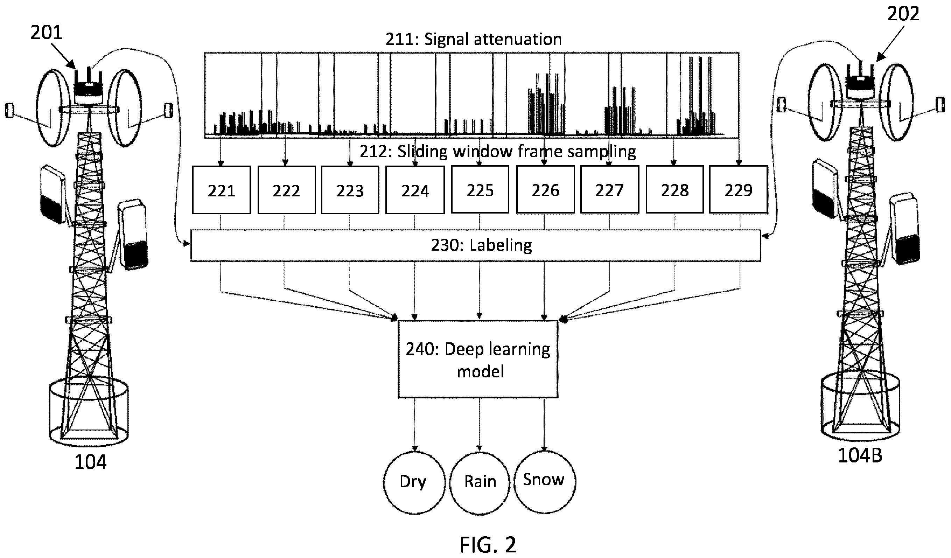

FIG. 2 illustrates an example embodiment of a system for training a deep learning model 240 for detecting and classifying weather conditions. As shown in FIG. 2, a one-time data gathering, labeling and training phase is performed with a sensor-based classification, where one or more weather sensors 201, 202 are used to label and map different weather conditions with their related signal attenuation 210. The attenuated telecommunication signal may be transmitted, for example, between two access nodes (base stations) 104, 104B of a radio access network, and the one or more weather sensors 201, 202 may be attached or located in close proximity to the access nodes (base stations) 104, 104B (e.g., there may be one weather sensor per access node). When this raw signal is labeled, it is ready for extracting its features using the deep learning model 240. Herein images of the labeled signal are used (instead of the actual signal itself) for feature extraction. This means that the signal is snapshotted with a suitable window-frame sampling 212, and a two-dimensional Mel-spectrogram 221, 222, 223, 224, 225, 226, 227, 228, 229 of each window frame (time frame) is generated. Then, in block 230, the label of each window frame is mapped to the Mel-Spectogram images 221, 222, 223, 224, 225, 226, 227, 228, 229, which are used as training data for training the deep learning model 240 for detecting and classifying weather conditions (e.g., rain, snow, and no precipitation). The training may be done in one of the access nodes (base stations) 104, 104A, or in a separate entity. It should be noted that, in an actual implementation, the number of spectrogram images may be different from that shown in FIG. 2.

As mentioned above, regular spectrogram functions may not be compatible with sampling frequencies equal to or less than 1 hertz. Therefore, the sampling frequency of the signal may be scaled up, so that it can be used with regular signal processing libraries. As a non-limiting example, the sampling frequency of the signal may be 0,5 hertz, and it may be scaled up to 2 hertz by multiplying the sampling frequency with a scaling factor of 4. Similarly, the window-frames may be scaled from minutes to seconds and matched to the scaling factor of the sampling frequency. This allows the spectrogram time axis to be in minutes. It should be noted that the upscaling of the sampling frequency means that the frequency axis may not be accurate on the values of the components of the signal. However, these values can be overlooked, as the purpose of this procedure is to go from a two-dimensional array to a three-dimensional matrix. This change of dimensions and processing provides more data for the deep learning model 240 for successful classification of the weather conditions.

The spectrogram images 221, 222, 223, 224, 225, 226, 227, 228, 229 can be produced using different time windows, as long as they are labeled with the weather condition recently reported by the one or more weather sensors 201, 202 (e.g., in the last minute). This way, the deep learning model 240 will be able to recognize the changes in the RSL or RSSI recordings before the weather event happens.

For example, the deep learning model 240 may comprise a residual network (ResNet), which is a deep learning model used for computer vision applications. ResNet is a convolutional neural network architecture designed to support hundreds or thousands of convolutional layers.

Table 1 below shows performance metrics of the ResNet model after transfer learning for 20 epochs with spectrograms. In the context of transfer learning, an epoch refers to one complete pass of the entire training dataset through the learning algorithm, where all data samples are exposed to the neural network for learning patterns. In this example, the ResNet model was pre-trained for image classification with one million images, and then fine-tuned with spectrograms of varying windows, where the weather conditions were dry (i.e., no precipitation), rain or snow according to the weather sensors 201, 202. The critical success index (CSI) and probability of detection (POD) for the classification of the spectrogram for dry, rain and snow conditions show a significant increase from those recorded with a model built from scratch. Additionally, the false alarm rate (FAR) is less than 8% for each of the weather conditions.

**Table 1.**

| **Label** | **Accuracy** | **CSI** | **POD** | **FAR** |
|---|---|---|---|---|
| Dry | 94,5 % | 0,8422 | 0,895 | 0,0648 |
| Rain | 95,8 % | 0,9115 | 0,958 | 0,0506 |
| Snow | 92,2 % | 0,8816 | 0,922 | 0,0773 |

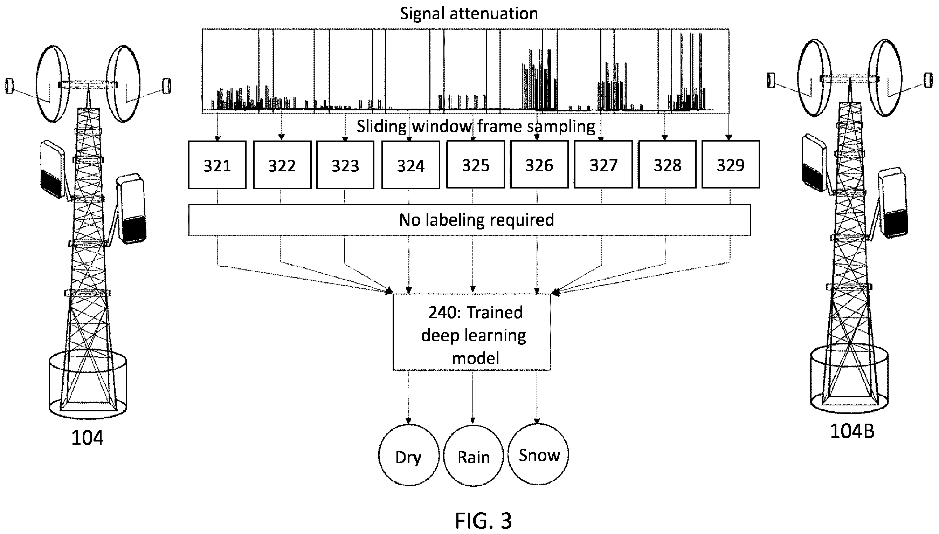

FIG. 3 illustrates an example embodiment of a system for using the trained deep learning model 240 for detecting and classifying weather conditions. In other words, FIG. 3 illustrates the deployment of the trained deep learning model 240 without any weather sensors. The trained deep learning model 240 may refer to the deep learning model 240 trained as described above with reference to FIG. 2.

When the training of the deep learning model 240 is done (i.e., when it has learned all the relevant features of the different weather conditions), the weather sensors 201, 202 are no longer needed for the inference phase. The trained deep learning model 240 may be deployed in the same device that trained the deep learning model 240, or the trained deep learning model 240 may be deployed in a different device than the device which trained the deep learning model 240. For example, the deep learning model 240 can be trained in one part of the world, and the deep learning model 240 can then be deployed to another part of the world to detect and classify the weather conditions in the other part of the world based on the signal attenuation (i.e., without any weather sensor installed), since the deep learning model 240 has trained those latent features. In this way, the network can be used as a sensor to make the most out of the already available signals in the telecommunication network (i.e., to use the telecommunication signals for weather sensing applications).

Referring to FIG. 3, a telecommunication signal may be transmitted, for example, between two access nodes (base stations) 104, 104B of a radio access network. Upon receiving the telecommunication signal that is attenuated in one or more weather conditions, a set of spectrogram images 321, 322, 323, 324, 325, 326, 327, 328, 329 are generated based on the telecommunication signal. In other words, the telecommunication signal is snapshotted with a suitable window-frame sampling, and a two-dimensional Mel-spectrogram 321, 322, 323, 324, 325, 326, 327, 328, 329 of each window frame is generated. The set of spectrogram images 321, 322, 323, 324, 325, 326, 327, 328, 329 is inputted to the trained deep learning model 240, which detects and classifies one or more weather conditions (e.g., dry, rain or snow) based on the set of spectrogram images. In this way, the trained deep learning model 240 may detect and classify the one or more weather conditions in real-time. It should be noted that, in an actual implementation, the number of spectrogram images may be different from that shown in FIG. 3.

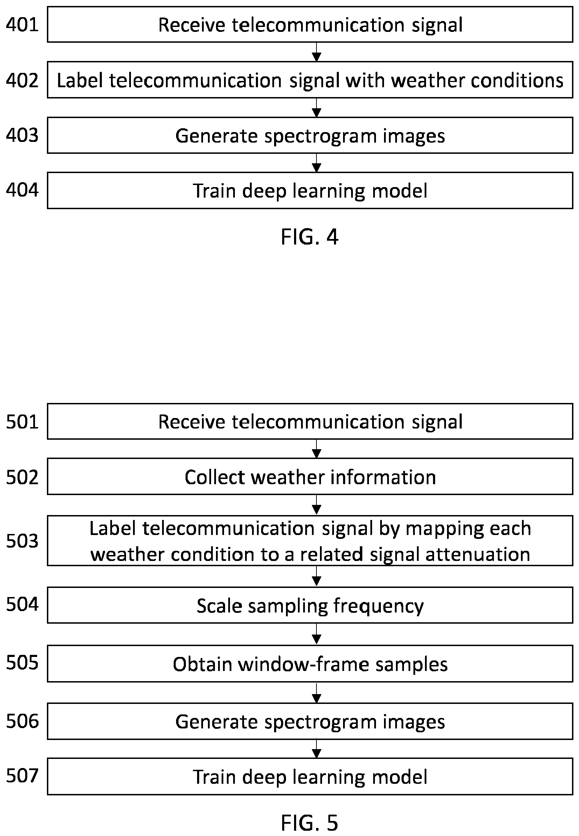

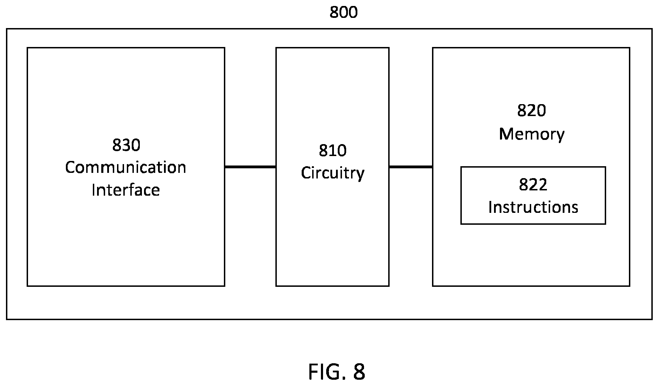

FIG. 4 illustrates a flow chart according to an example embodiment of a method for training a deep learning model 240 to detect and classify weather conditions. The method of FIG. 4 may be performed by an apparatus 800 depicted in FIG. 8.

Referring to FIG. 4, in block 401, a telecommunication signal is received, wherein the telecommunication signal is attenuated in multiple different weather conditions. For example, the telecommunication signal may be received from an access node (base station) 104 of a radio access network, or from any other wireless communication device. The telecommunication signal refers to a wireless signal, such as a millimeter-wave signal.

In block 402, the telecommunication signal is labeled with the multiple different weather conditions. The multiple different weather conditions may comprise, for example, at least: rain, snow (i.e., snowfall), and no precipitation. However, in warm areas (e.g., tropical areas), there may be no snowfall during the year, in which case the multiple different weather conditions may comprise at least rain and no precipitation. On the other hand, in very cold areas, there may be snowfall but no liquid rain during the year, in which case the multiple different weather conditions may comprise at least snow and no precipitation. Alternatively, or additionally, the multiple different weather conditions may comprise other weather conditions, such as fog and/or humidity levels.

In block 403, a set of spectrogram images 221, 222, 223, 224, 225, 226, 227, 228, 229 is generated based on the telecommunication signal labeled with the multiple different weather conditions. Each spectrogram image of the set of spectrogram images may be generated based on a received signal level or a received signal strength indicator of the telecommunication signal. The set of spectrogram images may comprise, for example, a set of two-dimensional Mel-spectrogram images.

In block 404, a deep learning model 240 is trained for detecting and classifying the multiple different weather conditions based on the set of spectrogram images 221, 222, 223, 224, 225, 226, 227, 228, 229.

The deep learning model 240 may comprise a convolutional neural network pre-trained for image classification. In this case, the training of the deep learning model 240 may comprise fine-tuning the convolutional neural network based on the set of spectrogram images 221, 222, 223, 224, 225, 226, 227, 228, 229 for detecting and classifying the multiple different weather conditions.

The trained deep learning model 240 may then be used to detect and classify one or more weather conditions by inputting one or more spectrogram images of an unlabeled telecommunication signal to the trained deep learning model 240. For example, the apparatus 800 itself may use the trained deep learning model 240 for detecting and classifying the one or more weather conditions. Alternatively, the apparatus 800 may transmit the trained deep learning model 240 to another apparatus (e.g., in a different location), which uses the trained deep learning model 240 for detecting and classifying the one or more weather conditions. The one or more weather conditions may comprise one or more weather conditions out of the multiple different weather conditions which the deep learning model 240 was trained to detect and classify.

FIG. 5 illustrates a flow chart according to an example embodiment of a method for training a deep learning model 240 to detect and classify weather conditions. The method of FIG. 5 may be performed by an apparatus 800 depicted in FIG. 8.

Referring to FIG. 5, in block 501, a telecommunication signal is received, wherein the telecommunication signal is attenuated in multiple different weather conditions. For example, the telecommunication signal may be received from an access node (base station) 104 of a radio access network, or from any other wireless communication device. The telecommunication signal refers to a wireless signal, such as a millimeter-wave signal.

In block 502, weather information is collected from one or more weather sensors 201, 202, wherein the weather information indicates the multiple different weather conditions in an area where the telecommunication signal is received. In other words, the one or more weather sensors 201, 202 may be located in the same location or area as the receiver and/or transmitter 104, 104B of the telecommunication signal. For example, the weather information may be collected over a time span of at least one year, or any other time span sufficient for observing the multiple different weather conditions.

In block 503, the telecommunication signal is labeled with the multiple different weather conditions by mapping each weather condition of the multiple different weather conditions to a related signal attenuation of the telecommunication signal. In other words, the labeling is based on the mapping.

The multiple different weather conditions may comprise, for example, at least: rain, snow, and no precipitation. Alternatively, or additionally, the multiple different weather conditions may comprise other weather conditions, such as fog and/or humidity levels.

In block 504, a sampling frequency of the telecommunication signal is scaled (e.g., upscaled) to be compatible with one or more signal processing libraries used for generating a set of spectrogram images.

In block 505, a set of window-frame samples of the labeled telecommunication signal is obtained or extracted according to the scaled sampling frequency. In other words, the telecommunication signal is divided into smaller segments (e.g., using a technique called windowing). These segments, or frames, enable to analyze and process the signal more effectively. This process may include applying a window function to each frame, which minimizes discontinuities and ensures accurate information extraction. The window-frame represents a time duration of one segment of the telecommunication signal.

In block 506, the set of spectrogram images 221, 222, 223, 224, 225, 226, 227, 228, 229 is generated based on the telecommunication signal labeled with the multiple different weather conditions and based on the scaled sampling frequency. The set of spectrogram images may be generated based on a received signal level or a received signal strength indicator of the telecommunication signal.

The set of spectrogram images correspond to the set of window-frame samples. In other words, the generation of the set of spectrogram images may comprise converting each window-frame sample of the labeled telecommunication signal into a two-dimensional Mel spectrogram image.

In block 507, a deep learning model 240 is trained for detecting and classifying the multiple different weather conditions based on the set of spectrogram images 221, 222, 223, 224, 225, 226, 227, 228, 229.

The training of the deep learning model 240 may comprise mapping a label of each window-frame sample of the labeled telecommunication signal to a corresponding spectrogram image of the set of spectrogram images 221, 222, 223, 224, 225, 226, 227, 228, 229.

The deep learning model 240 may comprise a convolutional neural network pre-trained for image classification. In this case, the training of the deep learning model 240 may comprise fine-tuning or retraining the convolutional neural network based on the set of spectrogram images 221, 222, 223, 224, 225, 226, 227, 228, 229 for detecting and classifying the multiple different weather conditions.

The trained deep learning model 240 may then be used to detect and classify one or more weather conditions by inputting one or more spectrogram images of an unlabeled telecommunication signal to the trained deep learning model 240. For example, the apparatus 800 itself may use the trained deep learning model 240 for detecting and classifying the one or more weather conditions. Alternatively, the apparatus 800 may transmit the trained deep learning model 240 to another apparatus (e.g., in a different location), which uses the trained deep learning model 240 for detecting and classifying the one or more weather conditions. The one or more weather conditions may comprise one or more weather conditions out of the multiple different weather conditions which the deep learning model 240 was trained to detect and classify.

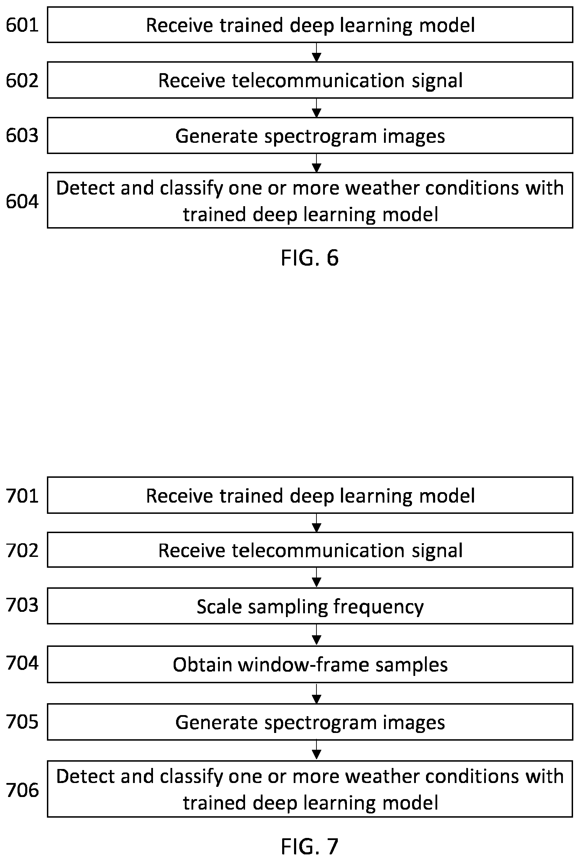

FIG. 6 illustrates a flow chart according to an example embodiment of a method for using a deep learning model to detect and classify weather conditions. The method of FIG. 6 may be performed by an apparatus 800 depicted in FIG. 8.

Referring to FIG. 6, in block 601, a deep learning model 240 is received, wherein the deep learning model 240 is (or was) trained for detecting and classifying multiple different weather conditions based on a set of spectrogram images 221, 222, 223, 224, 225, 226, 227, 228, 229. The deep learning model 240 may be received from another apparatus, such as the apparatus that trained the deep learning model 240.

In block 602, a telecommunication signal is received, wherein the telecommunication signal is attenuated in one or more weather conditions. The telecommunication signal refers to a wireless signal, such as a millimeter-wave signal.

In block 603, one or more spectrogram images 321, 322, 323, 324, 325, 326, 327, 328, 329 are generated based on the telecommunication signal. The set of spectrogram images may be generated based on a received signal level or a received signal strength indicator of the telecommunication signal.

The one or more spectrogram images 321, 322, 323, 324, 325, 326, 327, 328, 329 may be different from the set of spectrogram images 221, 222, 223, 224, 225, 226, 227, 228, 229 used for training the deep learning model 240.

In block 604, the one or more weather conditions are detected and classified with the trained deep learning model 240 by inputting the one or more spectrogram images to the trained deep learning model 240.

The one or more weather conditions may comprise at least one of: rain, snow (i.e., snowfall), or no precipitation. Alternatively, or additionally, the one or more weather conditions may comprise one or more other weather conditions, such as fog or humidity levels.

FIG. 7 illustrates a flow chart according to an example embodiment of a method for using a deep learning model to detect and classify weather conditions. The method of FIG. 7 may be performed by an apparatus 800 depicted in FIG. 8.

Referring to FIG. 7, in block 701, a deep learning model 240 is received, wherein the deep learning model 240 is (or was) trained for detecting and classifying multiple different weather conditions based on a set of spectrogram images 221, 222, 223, 224, 225, 226, 227, 228, 229. The deep learning model 240 may be received from another apparatus, such as the apparatus that trained the deep learning model 240.

In block 702, a telecommunication signal is received, wherein the telecommunication signal is attenuated in one or more weather conditions. The telecommunication signal refers to a wireless signal, such as a millimeter-wave signal. This telecommunication signal may be different from the telecommunication signal used for training the deep learning model 240.

In block 703, a sampling frequency of the telecommunication signal is scaled (e.g., upscaled) to be compatible with one or more signal processing libraries used for generating one or more spectrogram images.

In block 704, one or more window-frame samples of the (unlabeled) telecommunication signal is obtained or extracted according to the scaled sampling frequency. In other words, the telecommunication signal is divided into smaller segments (e.g., using a technique called windowing).

In block 705, the one or more spectrogram images 321, 322, 323, 324, 325, 326, 327, 328, 329 are generated based on the telecommunication signal and based on the scaled sampling frequency. The one or more spectrogram images may be generated based on a received signal level or a received signal strength indicator of the telecommunication signal.

The one or more spectrogram images correspond to the one or more window-frame samples. In other words, the generation of the one or more spectrogram images may comprise converting each window-frame sample of the (unlabeled) telecommunication signal into a two-dimensional Mel spectrogram image.

The one or more spectrogram images 321, 322, 323, 324, 325, 326, 327, 328, 329 may be different from the set of spectrogram images 221, 222, 223, 224, 225, 226, 227, 228, 229 used for training the deep learning model 240.

In block 706, the one or more weather conditions are detected and classified with the trained deep learning model 240 by inputting the one or more spectrogram images 321, 322, 323, 324, 325, 326, 327, 328, 329 to the trained deep learning model 240. In other words, the trained deep learning model 240 may classify each spectrogram image with a corresponding weather condition indicated by that spectrogram image. For example, the one or more weather conditions may comprise at least one of: rain, snow, or no precipitation. Alternatively, or additionally, the one or more weather conditions may comprise one or more other weather conditions, such as fog or humidity levels.

The blocks, related functions, and information exchanges (messages) described above by means of FIGS. 4 to 7 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 8 illustrates an example of an apparatus 800 comprising means for performing one or more of the example embodiments described above. For example, the apparatus 800 may be, or comprise, or be comprised, an access node (base station) 104 of a radio access network, or a computer or any other computing device.

The apparatus 800 may comprise, for example, a circuitry or a chipset applicable for realizing one or more of the example embodiments described above. The apparatus 800 may be an electronic device or computing system comprising one or more electronic circuitries. The apparatus 800 may comprise a circuitry 810 such as at least one processor, and at least one memory 820 storing instructions 822 which, when executed by the at least one processor, cause the apparatus 800 to carry out one or more of the example embodiments described above. Such instructions 822 may, for example, include computer program code (software). The at least one processor and the at least one memory storing the instructions may provide the means for providing or causing the performance of any of the methods and/or blocks described above. In another embodiment, the means may be a network function of the core network 110, or the means may be network function virtualization infrastructure.

The circuitry 810 may comprise, for example, a training circuitry for training the deep learning model 240. Alternatively, or additionally, the circuitry 810 may comprise an inference circuitry for detecting and classifying one or more weather conditions with the trained deep learning model 240.

The processor is coupled to the memory 820. The processor is configured to read and write data to and from the memory 820. The memory 820 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 820 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 820 or, alternatively or additionally, they may be received, by the apparatus, via an electromagnetic carrier signal and/or may be copied from a physical entity such as a computer program product. Execution of the computer readable instructions causes the apparatus 800 to perform one or more of the functionalities described above.

The memory 820 may be implemented using any suitable data storage technology, such as semiconductor-based memory devices, flash memory, magnetic memory devices and systems, optical memory devices and systems, fixed memory and/or removable memory.

The apparatus 800 may further comprise or be connected to a communication interface 830 comprising hardware and/or software for realizing communication connectivity according to one or more communication protocols. The communication interface 830 may comprise at least one transmitter (Tx) and at least one receiver (Rx) that may be integrated to the apparatus 800 or that the apparatus 800 may be connected to. The communication interface 830 may provide means for performing some of the blocks and/or functions (e.g., transmitting and receiving) for one or more example embodiments described above. The communication interface 830 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 830 provides the apparatus with communication capabilities to communicate in the wireless communication network. The communication interface 830 may, for example, provide a radio, cable or fiber interface to one or more access nodes 104 of a radio access network.

It is to be noted that the apparatus 800 may further comprise various components not illustrated in FIG. 8. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

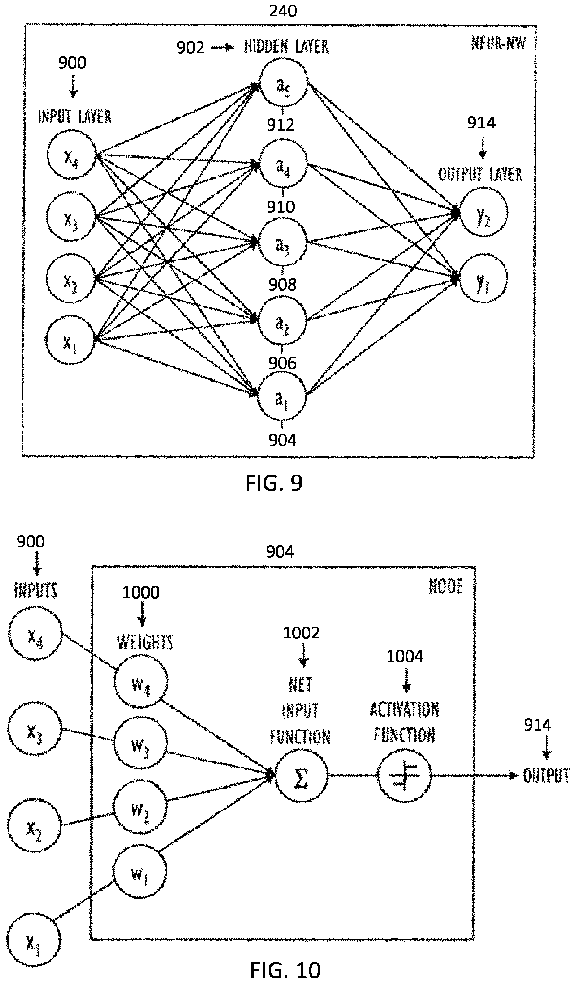

FIG. 9 illustrates an example of an artificial neural network 240, such as the deep learning model 240, with at least one hidden layer 902, and FIG. 10 illustrates an example of a computational node 904. However, it should be noted that the artificial neural network 240 may also comprise more than one hidden layer 902.

An artificial neural network (ANN) 240 comprises a set of rules that are designed to execute tasks such as regression, classification, clustering, and pattern recognition. The ANN may achieve such objectives with a learning/training procedure, where they are shown various examples of input data, along with the desired output. This way, the ANN learns to identify the proper output for any input within the training data manifold. Learning/training by using labels is called supervised learning and learning without labels is called unsupervised learning.

Deep learning (also known as deep structured learning or hierarchical learning) is part of a broader family of machine learning methods based on the layers used in the artificial neural network. A deep neural network (DNN) 240, such as the deep learning model 240, is an artificial neural network comprising multiple hidden layers 902 between the input layer 900 and the output layer 914. Training of DNN allows it to find the correct mathematical manipulation to transform the input into the proper output, even when the relationship is highly non-linear and/or complicated. Deep learning may require a large amount of input data.

A given hidden layer 902 comprises nodes 904, 906, 908, 910, 912, where the computation takes place. As shown in FIG. 10, a given node 904 combines input data 900 with a set of coefficients, or weights 1000, that either amplify or dampen that input 900, thereby assigning significance to inputs 900 with regard to the task that the algorithm is trying to learn. The input-weight products are added 1002 and the sum is passed through an activation function 1004, to determine whether and to what extent that signal should progress further through the neural network 240 to affect the ultimate outcome, such as an act of classification. In the process, the neural network learns to recognize correlations between certain relevant features and optimal results.

In the case of classification, the output of a DNN 240 may be considered as a likelihood of a particular outcome. In this case, the number of layers 902 may vary proportional to the number of the used input data 900. However, when the number of input data 900 is high, the accuracy of the outcome 914 is more reliable. On the other hand, when there are fewer layers 902, the computation might take less time and thereby reduce the latency. However, this highly depends on the specific DNN architecture and/or the computational resources available.

Initial weights 1000 of the model can be set in various alternative ways. During the training phase, they may be adapted to improve the accuracy of the process based on analyzing errors in decision-making. Training a model is basically a trial-and-error activity. In principle, a given node 904, 906, 908, 910, 912 of the neural network 240 makes a decision (input*weight) and then compares this decision to collected data to find out the difference to the collected data. In other words, it determines the error, based on which the weights 1000 are adjusted. Thus, the training of the model may be considered a corrective feedback loop.

For example, a neural network model may be trained using a stochastic gradient descent optimization algorithm, for which the gradients are calculated using the backpropagation algorithm. The gradient descent algorithm seeks to change the weights 1000, so that the next evaluation reduces the error, meaning that the optimization algorithm is navigating down the gradient (or slope) of error. It is also possible to use any other suitable optimization algorithm, if it provides sufficiently accurate weights 1000. Consequently, the trained parameters of the neural network 240 may comprise the weights 1000.

In the context of an optimization algorithm, the function used to evaluate a candidate solution (i.e., a set of weights) is referred to as the objective function. With neural networks, where the target is to minimize the error, the objective function may be referred to as a cost function or a loss function. In adjusting weights 1000, any suitable method may be used as a loss function. Some examples of a loss function are mean squared error (MSE), maximum likelihood estimation (MLE), and cross entropy.

As for the activation function 1004 of the node 904, it defines the output 914 of that node 904 given an input or set of inputs 900. The node 904 calculates a weighted sum of inputs, perhaps adds a bias, and then makes a decision as "activate" or "not activate" based on a decision threshold as a binary activation or using an activation function 1004 that gives a nonlinear decision function. Any suitable activation function 1004 may be used, for example sigmoid, rectified linear unit (ReLU), normalized exponential function (softmax), sotfplus, tanh, etc. In deep learning, the activation function 1004 may be set at the layer level and applies to all neurons (nodes) in that layer. The output 914 is then used as input for the next node and so on until a desired solution to the original problem is found.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising at least one processor, and at least one memory storing instructions that, when executed by the at least one processor, cause the apparatus at least to:
receive a telecommunication signal (211) that is attenuated in multiple different weather conditions;
label the telecommunication signal (211) with the multiple different weather conditions;
generate a set of spectrogram images (221-229) based on a set of window-frame samples of the telecommunication signal (211) labeled with the multiple different weather conditions; and
train a deep learning model (240) for detecting and classifying the multiple different weather conditions based on the set of spectrogram images (221-229) labeled with the multiple different weather conditions.

2. The apparatus of claim 1, further being caused to: detect and classify one or more weather conditions with the trained deep learning model (240) by inputting one or more spectrogram images of an unlabeled telecommunication signal to the trained deep learning model.

3. The apparatus of any preceding claim, further being caused to:
collect, from one or more weather sensors (210,202), weather information indicating the multiple different weather conditions in an area where the telecommunication signal is received; and
map each weather condition of the multiple different weather conditions to a related signal attenuation of the telecommunication signal,
wherein the labeling is based on the mapping.

4. The apparatus of any preceding claim, wherein the multiple different weather conditions comprise at least: rain, snow, and no precipitation.

5. The apparatus of any preceding claim, wherein the telecommunication signal comprises a millimeter-wave signal.

6. The apparatus of any preceding claim, wherein the set of spectrogram images (221-229) are generated based on a received signal level or a received signal strength indicator of the telecommunication signal.

7. The apparatus of any preceding claim, further being caused to:
scale a sampling frequency of the telecommunication signal to be compatible with one or more signal processing libraries used for generating the set of spectrogram images; and
obtain the set of window-frame samples of the labeled telecommunication signal according to the scaled sampling frequency,
wherein the set of spectrogram images (221-229) correspond to the set of window-frame samples.

8. The apparatus of any preceding claim, wherein the generation of the set of spectrogram images (221-229) comprises converting each window-frame sample of the labeled telecommunication signal into a two-dimensional Mel spectrogram image.

9. The apparatus of any preceding claim, wherein the training of the deep learning model (240) comprises mapping a label of each window-frame sample of the labeled telecommunication signal to a corresponding spectrogram image of the set of spectrogram images.

10. The apparatus of any preceding claim, wherein the deep learning model (240) comprises a convolutional neural network pre-trained for image classification,
wherein the training of the deep learning model (240) comprises fine-tuning the convolutional neural network based on the set of spectrogram images for detecting and classifying the multiple different weather conditions.

11. An apparatus comprising at least one processor, and at least one memory storing instructions that, when executed by the at least one processor, cause the apparatus at least to:
receive a deep learning model (240) trained for detecting and classifying multiple different weather conditions based on a set of spectrogram images;
receive a telecommunication signal that is attenuated in one or more weather conditions;
generate one or more spectrogram images (321-329) based on a set of window-frame samples of the telecommunication signal; and
detect and classify the one or more weather conditions with the deep learning model (240) by inputting the one or more spectrogram images to the deep learning model (240).

12. The apparatus of claim 11, wherein the deep learning model was trained by the apparatus of any of claims 1 to 10.

13. A method comprising:
receiving a telecommunication signal (211) that is attenuated in multiple different weather conditions;
labeling the telecommunication signal (211) with the multiple different weather conditions;
generating a set of spectrogram images (221-229) based on a set of window-frame samples of the telecommunication signal labeled with the multiple different weather conditions; and
training a deep learning model (240) for detecting and classifying the multiple different weather conditions based on the set of spectrogram images (221-229) labeled with the multiple different weather conditions.

14. A method comprising:
receiving a deep learning model (240) trained for detecting and classifying multiple different weather conditions based on a set of spectrogram images;
receiving a telecommunication signal that is attenuated in one or more weather conditions;
generating one or more spectrogram images (321-329) based on a set of window-frame samples of the telecommunication signal; and
detecting and classifying the one or more weather conditions with the deep learning model (240) by inputting the one or more spectrogram images to the deep learning model (240).

15. A non-transitory computer readable medium comprising program instructions which, when executed by an apparatus, cause the apparatus to perform at least the following:
receiving a telecommunication signal (211) that is attenuated in multiple different weather conditions;
labeling the telecommunication signal (211) with the multiple different weather conditions;
generating a set of spectrogram images (221-229) based on a set of window-frame samples of the telecommunication signal (211) labeled with the multiple different weather conditions; and
training a deep learning model (240) for detecting and classifying the multiple different weather conditions based on the set of spectrogram images (221-229) labeled with the multiple different weather conditions.
